# EUROPEAN PATENT APPLICATION

(11) **EP 4 773 197 A1**
(43) Date of publication of application: **08.07.2026**
(21) Application number: 24887302.8
(22) Date of filing: 06.05.2024
(51) Int. Cl.: H01M 4/13, H01M 4/62

(54) **POSITIVE ELECTRODE SHEET AND PREPARATION METHOD THEREFOR, BATTERY, AND ELECTRIC DEVICE**

(30) Priority: 08.11.2023 CN 202311481737
(71) Applicant: Contemporary Amperex Technology Co., Limited, Ningde, Fujian 352100 (CN)
(72) Inventor: WU, Kai, Ningde, Fujian 352100 (CN); LIU, Huanji, Ningde, Fujian 352100 (CN); LIN, Kui, Ningde, Fujian 352100 (CN); XIE, Haotian, Ningde, Fujian 352100 (CN); CHEN, Xiao, Ningde, Fujian 352100 (CN); SUN, Xin, Ningde, Fujian 352100 (CN); YE, Yonghuang, Ningde, Fujian 352100 (CN)
(74) Representative: Ziebig Hengelhaupt Intellectual Property Attorneys Patentanwaltskanzlei PartGmbB
(86) International application number: PCT/CN2024/091277
(87) International publication number: WO 2025/097678

(57) **Abstract**

A positive electrode sheet and a preparation method therefor, a battery, and an electric device. The positive electrode sheet comprises: a positive electrode active material layer, the positive electrode active material layer comprising a positive electrode active material; and a capacity compensation layer, the capacity compensation layer being provided on at least one side of the positive electrode active material layer, and the capacity compensation layer comprising a capacity compensation agent and an additive. Therefore, the probability that the additive reacts with residual alkali is increased, the content of residual alkali on the surface of the capacity compensation agent is reduced, the capacity compensation effect is improved, and the cycle capacity retention rate of the battery is improved.

## Description

### TECHNICAL FIELD

The present application relates to the technical field of batteries, and in particular, to a positive electrode plate and a preparation method therefor, a battery, and an electric device.

### BACKGROUND

Batteries are not only applied in energy storage power systems such as hydropower, thermal power, wind power, and solar power stations, but also widely applied in electric transportation vehicles such as electric bicycles, electric motorcycles, or electric cars, as well as in military equipment, aerospace, and other fields. During the formation of the battery, a solid electrolyte interphase film (SEI film) is formed on the surface of the negative electrode plate, and active ions are consumed during the process of forming the SEI film. In order to compensate for irreversible capacity loss caused by the formation of the SEI film, a capacity compensation agent may be disposed on the positive electrode plate. The capacity compensation agent can release sufficient active ions during the initial cycle of the charging process, thereby improving the cycle capacity retention rate of the battery. However, the residual alkali on the surface of the capacity compensation agent will affect the release of active ions from the capacity compensation agent, resulting in a reduction in the capacity compensation effect and a reduction in the cycle capacity retention rate of the battery.

### SUMMARY

In view of the technical problems described in the background section, the present application provides a positive electrode plate, which can increase the probability of contact between the capacity compensation agent and the additive, enhance the capacity compensation effect, and improve the cycle capacity retention rate of the battery.

A first aspect of the present application provides a positive electrode plate. The positive electrode plate includes: a positive electrode active material layer, where the positive electrode active material layer includes a positive electrode active material; and a capacity compensation layer, where the capacity compensation layer is disposed on at least one side of the positive electrode active material layer, the capacity compensation layer includes a capacity compensation agent and an additive, and the additive includes at least one of elemental sulfur, sulfide, elemental selenium, selenide, elemental phosphorus, phosphide, elemental tellurium, elemental iodine, or elemental boron.

According to the positive electrode plate provided in the present application, the capacity compensation agent and the additive are simultaneously located in the capacity compensation layer, such that the probability of contact between the capacity compensation agent and the additive can be increased, the probability of reaction between the additive and the residual alkali can be increased, the residual alkali content on the surface of the capacity compensation agent can be reduced, and the effect of capacity compensation can be enhanced, thereby improving the cycle capacity retention rate of the battery. The additive of the above types is dissolved in the electrolytic solution to form ions, which can diffuse to the negative electrode and participate in the formation of an SEI film, thereby improving the structural stability of the SEI film, and thus prolonging the cycle life of the battery while reducing the direct-current internal resistance (DCR) of the battery.

According to some embodiments of the present application, at least part of the surface of the capacity compensation agent is coated with the additive. In this way, the additive can react with the residual alkali on the surface of the capacity compensation agent to form a fast-ionic conductor layer on the surface of the capacity compensation agent, thereby improving the ionic conductivity of the capacity compensation agent.

According to some embodiments of the present application, based on a total mass of the capacity compensation layer and the positive electrode active material layer, a mass proportion of the capacity compensation agent is a₁, a mass proportion of the additive is a₂, and 0.01 ≤ a₂/a₁ ≤ 0.45 is satisfied. In this way, while the content of residual alkali on the surface of the capacity compensation agent is reduced, the probability of reaction between the additive and the capacity compensation agent is also reduced, thereby reducing the impact of the additive on the capacity of the capacity compensation agent.

According to some embodiments of the present application, 0.5% ≤ a₁ ≤ 12%.

According to some embodiments of the present application, 1% ≤ a₁ ≤ 10%.

In this way, by setting a₁ within the above range, the capacity compensation effect is enhanced, and the cycle capacity retention rate of the battery is improved.

According to some embodiments of the present application, 0.05% ≤ a₂ ≤ 2%.

According to some embodiments of the present application, 0.1% ≤ a₂ ≤ 0.5%.

In this way, by setting a₂ within the above range, the probability of contact between the additive and the capacity compensation agent is increased, the reduction effect of the additive on the capacity compensation agent is enhanced, the decomposition of the capacity compensation agent to release active ions is promoted, thereby improving the cycle capacity retention rate of the battery.

According to some embodiments of the present application, based on the total mass of the positive electrode active material layer and the capacity compensation layer, a mass proportion of the positive electrode active material is 80%-96%. In this way, the energy density of the battery is improved.

According to some embodiments of the present application, the sulfide includes at least one of lithium sulfide, sodium sulfide, selenium sulfide, cobalt sulfide, or nickel sulfide.

According to some embodiments of the present application, the phosphide includes at least one of lithium phosphide or sodium phosphide.

According to some embodiments of the present application, the selenide includes at least one of lithium selenide or sodium selenide.

In this way, when the additive is the above material, the additive can react with the residual alkali on the surface of the capacity compensation agent to form a fast-ionic conductor layer, thereby improving the ionic conductivity of the capacity compensation agent and enhancing the effect of compensating for active ions. Meanwhile, the additive of the above types can also diffuse to the negative electrode and combine with active ions to form a dense SEI film, thereby improving the toughness of the SEI film, reducing the DCR of the battery, and prolonging the cycle life of the battery.

According to some embodiments of the present application, a carbon coating layer is formed on at least part of the surface of the capacity compensation agent. In this way, the electronic conductivity of the capacity compensation agent is improved, the decomposition potential of the capacity compensation agent is reduced, the effect of compensating for active ions is enhanced, and the cycle capacity retention rate of the battery is improved.

According to some embodiments of the present application, based on a total mass of the capacity compensation agent, a mass proportion of the carbon coating layer is 0.5%-10%. In this way, the electronic conductivity of the capacity compensation agent is improved, the decomposition potential of the capacity compensation agent is reduced, the effect of compensating for active ions is enhanced, and the cycle capacity retention rate of the battery is improved.

According to some embodiments of the present application, the capacity compensation layer further includes the positive electrode active material. In this way, the difficulty in forming the capacity compensation layer is reduced, and the energy density of the battery is improved.

According to some embodiments of the present application, the capacity compensation agent includes a lithium supplement agent and/or a sodium supplement agent, and the lithium supplement agent includes at least one of Li₂C₂O₄, Li₂M₁O₂, Li₂M₂O₃, Li₅FeₓM₃₍₁₋ₓ₎O₄, Li₆Mn_{y}M_{4(1-y)}O₄, or Li₆Co_{y}M_{4(1-y)}O₄, where 0.5 ≤ x ≤ 1, 0.5 ≤ y ≤ 1, M₁ includes at least one of Ni, Mn, Cu, Fe, Cr, or Mo, M₂ includes at least one of Ni, Mn, Fe, Mo, Zr, Si, Cu, Cr, or Ru, M₃ includes at least one of Al, Nb, Co, Mn, Ni, Mo, Ru, or Cr, M₄ includes at least one of Ni, Fe, Cu, or Ru, and the sodium supplement agent includes at least one of Na₂O, Na₂O₂, Na₂CO₃, Na₂C₂O₄, Na₂C₄O₄, Na₂S, Na₂Se, Na₂Se₂, NaCrO₂, Na₃P, Na₃N, Na₂NiO₂, Na₂CuO₂, Na₂FeO₂, or NaF. In this way, when the battery is a lithium-ion battery or a sodium-ion battery, the cycle capacity retention rate of the battery in both cases can be improved.

According to some embodiments of the present application, the capacity compensation layer further includes at least one of a binder and a conductive agent. In this way, the adhesion between the capacity compensation layer and the positive electrode active material layer is improved, and the risk of film layer peeling off is reduced.

A second aspect of the present application provides a method for preparing a positive electrode plate. The method includes: forming a capacity compensation layer on at least one side of a positive electrode active material layer, where the capacity compensation layer includes a capacity compensation agent and an additive, and the additive includes at least one of elemental sulfur, sulfide, elemental selenium, selenide, elemental phosphorus, phosphide, elemental tellurium, elemental iodine, or elemental boron. In this way, the probability of contact between the capacity compensation agent and the additive is increased, the probability of reaction between the additive and the residual alkali is increased, the residual alkali content on the surface of the capacity compensation agent is reduced, and the effect of capacity compensation is enhanced, thereby improving the cycle capacity retention rate of the battery.

A third aspect of the present application provides a battery. The battery includes the positive electrode plate according to the first aspect of the present application or the positive electrode plate prepared by the method according to the second aspect of the present application. In this way, the cycle capacity retention rate of the battery is improved, and the DCR of the battery is reduced.

A fourth aspect of the present application provides an electric device. The electric device includes the battery according to the third aspect of the present application. In this way, the service life of the electric device is prolonged.

The additional aspects and the advantages of the present application will be partially provided in the following description, will partially become apparent from the following description, or will be learned through the practice of the present application.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural view of a positive electrode plate according to one embodiment of the present application.
FIG. 2 is a schematic structural view of a capacity compensation agent according to one embodiment of the present application.
FIG. 3 is a schematic structural view of a capacity compensation agent according to another embodiment of the present application.
FIG. 4 is a schematic structural view of a capacity compensation agent according to another embodiment of the present application.
FIG. 5 is a schematic structural view of a capacity compensation agent according to another embodiment of the present application.
FIG. 6 is a schematic structural view of a positive electrode plate according to another embodiment of the present application.
FIG. 7 is a schematic structural view of a positive electrode plate according to another embodiment of the present application.
FIG. 8 is a schematic view of a battery according to one embodiment of the present application.
FIG. 9 is an exploded view of the battery according to one embodiment of the present application shown in FIG. 8.
FIG. 10 is a schematic view of a battery module according to one embodiment of the present application.
FIG. 11 is a schematic view of a battery pack according to one embodiment of the present application.
FIG. 12 is an exploded view of the battery pack according to one embodiment of the present application shown in FIG. 11.
FIG. 13 is a schematic view of an electric device using a battery as the power source according to one embodiment of the present application.

### Description of the reference numerals:

1: battery; 11: housing; 12: electrode assembly; 13: cover plate; 2: battery module; 3: battery pack; 31: upper case body; 32: lower case body; 110: conductive agent; 120: additive; 130: capacity compensation agent; 1000: positive electrode plate; 1100: positive electrode current collector; 1200: positive electrode active material layer; 1210: first positive electrode active material layer; 1220: second positive electrode active material layer; 1300: capacity compensation layer.

### DETAILED DESCRIPTION

Embodiments of the technical solutions of the present application are described in detail below. The following embodiments are only used to more clearly illustrate the technical solutions of the present application, and therefore, are only exemplary and do not limit the protection scope of the present application.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

At present, judging from the trends of the market situation, the application of batteries is becoming increasingly widespread. Batteries are not only applied in energy storage power systems such as hydropower, thermal power, wind power, and solar power stations, but also widely applied in electric transportation vehicles such as electric bicycles, electric motorcycles, or electric cars, as well as in military equipment, aerospace, and other fields. With the continuous expansion of the application field of batteries, the market demand for batteries is also constantly increasing.

During the formation of the battery, an SEI film is formed on the surface of the negative electrode, and a large number of active ions are consumed during the formation of the SEI film, thereby reducing the cycle capacity retention rate of the battery. In order to improve the cycle capacity retention rate of the battery, the positive electrode may be subjected to capacity compensation in advance. When the positive electrode is subjected to capacity compensation, additives rich in active ions are generally employed. The additives can release active ions to compensate for the consumption of the active ions. During the sintering process for preparing the capacity compensation agent, residual alkali is generated on the surface of the capacity compensation agent. The residual alkali on the surface affects the release of active ions from the capacity compensation agent, resulting in a reduction in the capacity compensation effect. The residual alkali in the positive electrode slurry may cause the positive electrode slurry to form a gel, and may undergo side reactions with the electrolytic solution, thereby causing gas generation in the battery. By introducing an additive, the residual alkali on the surface of the capacity compensation agent can react with the additive and be consumed, thereby enhancing the capacity compensation effect and prolonging the service life of the battery. However, since the content of the positive electrode active material on the positive electrode plate is relatively high, and the contents of the additive and the capacity compensation agent are relatively low, the probability of contact between the two is relatively low, thereby reducing the probability of reaction between the additive and the residual alkali.

The positive electrode plate, the additive, and the capacity compensation agent according to the present application are disposed in the same layer, which increases the probability of contact between the additive and the capacity compensation agent and increases the probability of reaction between the additive and the residual alkali on the surface of the capacity compensation agent. Additionally, a fast-ionic conductor layer can be generated on the surface of the capacity compensation agent after the reaction between the additive and the residual alkali, which improves the ionic conductivity of the capacity compensation agent, enhances the effect of capacity compensation, and improves the cycle capacity retention rate of the battery.

The positive electrode plate disclosed in the embodiments of the present application is applicable to a lithium-ion battery and a sodium-ion battery, and the battery disclosed in the embodiments of the present application may be used in an electric device using a battery as a power source or various energy storage systems using a battery as an energy storage element. The electric device may include, but is not limited to, a mobile phone, a tablet, a laptop computer, an electric toy, an electric tool, an electric bike, an electric car, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

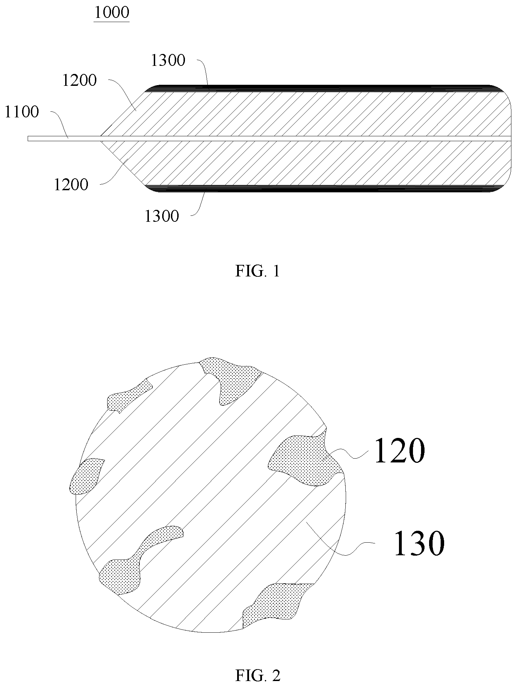

A first aspect of the present application provides a positive electrode plate 1000. Referring to FIG. 1, the positive electrode plate 1000 includes a positive electrode active material layer 1200. The positive electrode active material layer 1200 includes a positive electrode active material and a capacity compensation layer 1300. The capacity compensation layer 1300 is disposed on at least one side of the positive electrode active material layer 1200. The capacity compensation layer 1300 includes a capacity compensation agent (not shown in the figure) and an additive (not shown in the figure), and the additive includes at least one of elemental sulfur, sulfide, elemental selenium, selenide, elemental phosphorus, phosphide, elemental tellurium, elemental iodine, or elemental boron.

In the positive electrode plate 1000 provided in the present application, the capacity compensation agent and the additive are simultaneously located in the capacity compensation layer 1300, such that the probability of contact between the capacity compensation agent and the additive can be increased, the probability of reaction between the additive and the residual alkali on the surface of the capacity compensation agent can be increased, the residual alkali content on the surface of the capacity compensation agent can be reduced, and the effect of capacity compensation can be enhanced, thereby improving the cycle capacity retention rate of the battery. By reducing the content of residual alkali on the surface of the capacity compensation agent through the additive, the risk of gelation of the positive electrode slurry is reduced, and the probability of gas generation in the battery caused by the reaction between the residual alkali and the electrolytic solution is reduced, thereby prolonging the cycle life of the battery. The additive 120 of the above types is dissolved in the electrolytic solution to form ions and participate in the formation of the SEI film, thereby improving the structural stability of the SEI film, and thus prolonging the cycle life of the battery while reducing the DCR of the battery.

According to some embodiments of the present application, referring to FIG. 2, at least part of the surface of the capacity compensation agent 130 may be coated with the additive 120. In this way, the probability of contact between the additive 120 and the capacity compensation agent 130 is further increased, the probability of reaction between the additive 120 and the residual alkali is increased, the content of residual alkali on the surface of the capacity compensation agent 130 is reduced, and the effect of capacity compensation is enhanced, thereby improving the cycle capacity retention rate of the battery.

According to some embodiments of the present application, based on the total mass of the capacity compensation layer and the positive electrode active material layer, the mass proportion of the capacity compensation agent is a₁, the mass proportion of the additive is a₂, and 0.01 ≤ a₂/a₁ ≤ 0.45. For example, a₂/a₁ may be 0.01, 0.05, 0.1, 0.15, 0.2, 0.25, 0.3, 0.35, 0.4, 0.45, or the like, or may be in a range formed by any of the foregoing values. In this way, while the content of residual alkali on the surface of the capacity compensation agent 130 is reduced, the probability of reaction between the additive 120 and the capacity compensation agent 130 is also reduced, thereby reducing the impact of the additive 120 on the capacity of the capacity compensation agent 130.

According to some embodiments of the present application, 1% ≤ a₁ + a₂ ≤ 12%. For example, a₁ + a₂ may be 1%, 2%, 3%, 4%, 5%, 6%, 7%, 8%, 9%, 10%, 11%, 12%, or the like, or may be in a range formed by any of the foregoing values. In this way, the effect of capacity compensation is enhanced, the cycle capacity retention rate of the battery is improved, the content of residual alkali on the surface of the capacity compensation agent 130 is reduced, the risk of gelation of the positive electrode slurry is reduced, the probability of gas generation in the battery caused by the reaction between the residual alkali and the electrolytic solution is reduced, and the service life of the battery is prolonged. According to some specific embodiments of the present application, based on the total mass of the capacity compensation layer 1300, the total mass proportion of the capacity compensation agent 130 and the additive 120 is 1.1%-5.5%.

According to some embodiments of the present application, 0.5% ≤ a₁ ≤ 12%. For example, a₁ may be 0.5%, 0.7%, 1%, 2%, 3%, 4%, 5%, 6%, 7%, 8%, 9%, 10%, 12%, or the like, or may be in a range formed by any of the foregoing values. In this way, the effect of capacity compensation is enhanced, and the cycle capacity retention rate of the battery is improved. According to some specific embodiments of the present application, 1% ≤ a₁ ≤ 10%.

According to some embodiments of the present application, 0.05% ≤ a₂ ≤ 2%. For example, a₂ may be 0.05%, 0.07%, 0.1%, 0.3%, 0.5%, 0.7%, 0.9%, 1.1%, 1.3%, 1.5%, 1.7%, 1.9%, 2%, or the like, or may be in a range formed by any of the foregoing values. In this way, while the content of residual alkali on the surface of the capacity compensation agent 130 is reduced, the probability of reaction between the additive 120 and the capacity compensation agent 130 is also reduced, thereby reducing the impact of the additive 120 on the capacity of the capacity compensation agent 130. According to some specific embodiments of the present application, 0.1% ≤ a₂ ≤ 0.5%.

According to some embodiments of the present application, based on the total mass of the positive electrode active material layer 1200 and the capacity compensation layer 1300, the mass proportion of the positive electrode active material is b, and a₂/b ≤ 0.5%. For example, a₂/b may be 0.005%, 0.01%, 0.1%, 0.15%, 0.2%, 0.25%, 0.3%, 0.35%, 0.4%, 0.45%, 0.5%, or the like, or may be in a range formed by any of the foregoing values. In this way, the probability of reaction between the additive 120 and the positive electrode active material is reduced, and the energy density of the battery is improved. According to some specific embodiments of the present application, 0.01% ≤ a₂/b ≤ 0.3%.

According to some embodiments of the present application, 80% ≤ b ≤ 96%. For example, b may be 80%, 82%, 84%, 86%, 88%, 90%, 92%, 94%, 96%, or the like, or may be in a range formed by any of the foregoing values.

According to some embodiments of the present application, the sulfide may include at least one of lithium sulfide, sodium sulfide, selenium sulfide, cobalt sulfide, or nickel sulfide.

According to some embodiments of the present application, the phosphide may include at least one of lithium phosphide or sodium phosphide.

According to some embodiments of the present application, the selenide may include at least one of lithium selenide or sodium selenide.

In this way, when the additive 120 is the above material, the additive 120 can react with the residual alkali on the surface of the capacity compensation agent 130 to form a fast-ionic conductor layer, thereby improving the ionic conductivity of the capacity compensation agent 130 and enhancing the effect of compensating for active ions. Meanwhile, the additive 120 of the above types is dissolved in the electrolytic solution to form ions, so as to diffuse to the negative electrode and combine with active ions to form a dense SEI film, thereby improving the toughness of the SEI film, reducing the DCR of the battery, and prolonging the cycle life of the battery.

According to some embodiments of the present application, a carbon coating layer 110 is formed on at least part of the surface of the capacity compensation agent 130. In this way, the electronic conductivity of the capacity compensation agent 130 is improved, the decomposition potential of the capacity compensation agent 130 is reduced, the effect of compensating for active ions is enhanced, and the cycle capacity retention rate of the battery is improved.

In the present application, the active ion may include Li⁺ or Na⁺.

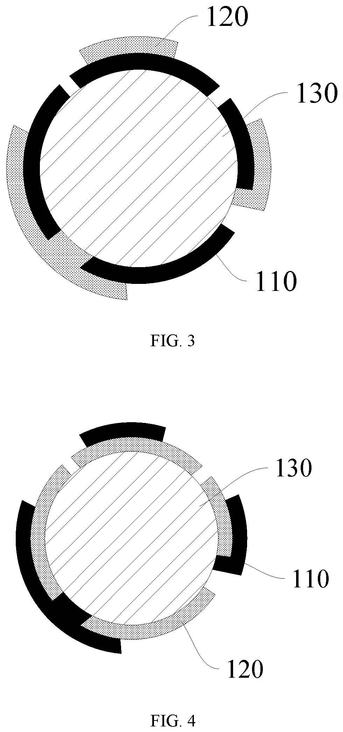

According to some embodiments of the present application, referring to FIG. 3, at least part of the surface of the capacity compensation agent 130 is coated with the carbon coating layer 110, and at least part of the surface of the carbon coating layer 110 is coated with the additive 120.

According to some embodiments of the present application, referring to FIG. 4, at least part of the surface of the capacity compensation agent 130 is coated with the additive 120, and at least part of the surface of the additive 120 is coated with the carbon coating layer 110.

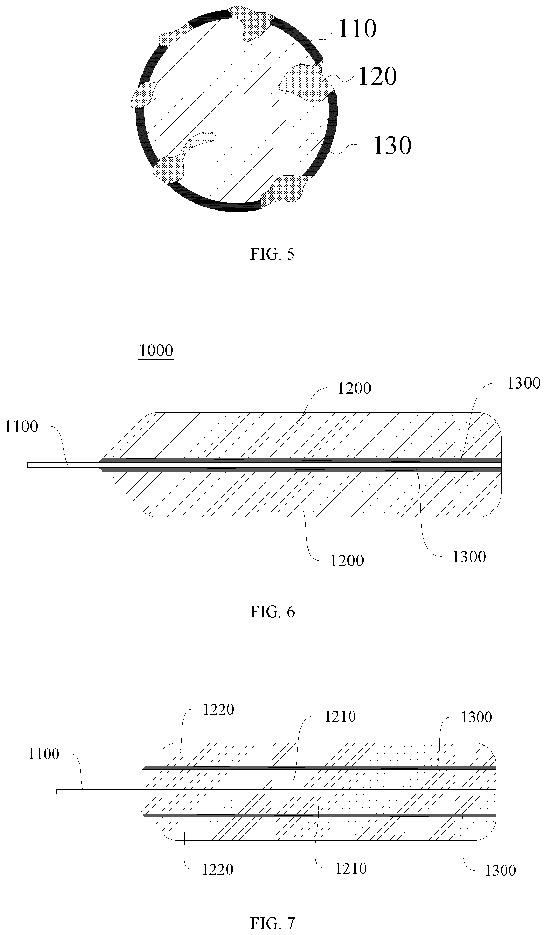

According to some embodiments of the present application, referring to FIG. 5, part of the surface of the capacity compensation agent 130 is coated with the carbon coating layer 110, and part of the surface of the capacity compensation agent 130 that is not coated with the conductive agent is coated with the additive 120.

In this way, the electronic conductivity and the ionic conductivity of the capacity compensation agent 130 are improved, and the effect of compensating for active ions is enhanced.

According to some embodiments of the present application, when the surface of the capacity compensation agent 130 is coated with both the carbon coating layer 110 and the additive 120, the capacity compensation agent 130 may be prepared by the following method: ball-milling the capacity compensation agent coated with the carbon coating layer 110 and the additive, and then placing the mixture in a reaction kettle, where the heating temperature is 140 °C-200 °C and the heating duration is 6 h-15 h, to obtain the capacity compensation agent 130 coated with the carbon coating layer 110 and the additive 120 on the surface. According to some specific embodiments of the present application, the heating temperature may be 150 °C, 160 °C, 170 °C, 180 °C, 190 °C, 200 °C, or the like, or may be in a range formed by any of the foregoing values. According to some specific embodiments of the present application, the heating duration may be 6 h, 7 h, 8 h, 9 h, 10 h, 11 h, 12 h, 13 h, 14 h, 15 h, 16 h, or the like, or may be in a range formed by any of the foregoing values.

According to some embodiments of the present application, based on the total mass of the capacity compensation agent 130, the mass proportion of the carbon coating layer 110 may be 0.5%-10%. For example, the mass proportion may be 0.5%, 0.7%, 1%, 1.3%, 1.6%, 1.8%, 2%, 3%, 4%, 5%, 6%, 7%, 8%, 9%, 10%, or the like, or may be in a range formed by any of the foregoing values. In this way, the electronic conductivity of the capacity compensation agent 130 is improved, the decomposition potential of the capacity compensation agent 130 is reduced, the effect of compensating for active ions is enhanced, and the cycle capacity retention rate of the battery is improved.

According to some embodiments of the present application, the capacity compensation layer 1300 may further include the positive electrode active material. In this way, a small amount of the positive electrode active material is added to the capacity compensation layer 1300, such that the thickness of the capacity compensation layer 1300 is increased, the difficulty in forming the capacity compensation layer 1300 is reduced, and the energy density of the battery is improved.

According to some embodiments of the present application, referring to FIG. 1, the positive electrode plate 1000 further includes a positive electrode current collector 1100. The positive electrode active material layer 1200 is disposed on at least one side of the positive electrode current collector 1100, and the capacity compensation layer 1300 is disposed on a side of the positive electrode active material layer 1200 distal to the positive electrode current collector 1100.

According to some embodiments of the present application, referring to FIG. 6, the positive electrode plate 1000 further includes a positive electrode current collector 1100. The positive electrode active material layer 1200 is disposed on at least one side of the positive electrode current collector 1100, and the capacity compensation layer 1300 is disposed between the positive electrode active material layer 1200 and the positive electrode current collector 1100.

According to some embodiments of the present application, referring to FIG. 7, the positive electrode plate 1000 further includes a positive electrode current collector 1100. The positive electrode active material layer 1200 includes a first positive electrode active material layer 1210 and a second positive electrode active material layer 1220, the first positive electrode active material layer 1210 is disposed on at least one side of the positive electrode current collector 1100, the second positive electrode active material layer 1220 is disposed on a side of the first positive electrode active material layer 1210 distal to the positive electrode current collector 1100, and the capacity compensation layer 1300 is disposed between the first positive electrode active material layer 1210 and the second positive electrode active material layer 1220.

In this way, the battery including the positive electrode plate 1000 having the above structure achieves an excellent cycle capacity retention rate and capacity.

According to some embodiments of the present application, the positive electrode plate may be prepared by gravure primer coating. Specifically, the capacity compensation layer and the positive electrode active material layer are separately formed on the positive electrode current collector by gravure coating.

According to some other embodiments of the present application, the capacity compensation layer and the positive electrode active material layer may be simultaneously formed through a dual-layer coating die.

According to some other embodiments of the present application, the positive electrode active material layer and the capacity compensation layer may be formed by multiple coating processes.

As an example, a metal foil or a composite current collector may be used as the positive electrode current collector 1100. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

According to some embodiments of the present application, the capacity compensation agent 130 includes a lithium supplement agent and/or a sodium supplement agent, and the lithium supplement agent includes at least one of Li₂C₂O₄, Li₂M₁O₂, Li₂M₂O₃, Li₅FeₓM₃₍₁₋ₓ₎O₄, Li₆Mn_{y}M_{4(1-y)}O₄, or Li₆Co_{y}M_{4(1-y)}O₄, where 0.5 ≤ x ≤ 1, 0.5 ≤ y ≤ 1, M₁ includes at least one of Ni, Mn, Cu, Fe, Cr, or Mo, M₂ includes at least one of Ni, Mn, Fe, Mo, Zr, Si, Cu, Cr, or Ru, M₃ includes at least one of Al, Nb, Co, Mn, Ni, Mo, Ru, or Cr, M₄ includes at least one of Ni, Fe, Cu, or Ru, and the sodium supplement agent includes at least one of Na₂O, Na₂O₂, Na₂CO₃, Na₂C₂O₄, Na₂C₄O₄, Na₂S, Na₂Se, Na₂Se₂, NaCrO₂, Na₃P, Na₃N, Na₂NiO₂, Na₂CuO₂, Na₂FeO₂, or NaF. In this way, when the battery is a lithium-ion battery, a lithium supplement agent may be used as the capacity compensation agent 130, and the additive 120 can react with the residual alkali on the surface of the lithium supplement agent, thereby reducing the content of residual alkali on the surface of the lithium supplement agent, enhancing the capacity compensation effect of the lithium supplement agent, and improving the cycle capacity retention rate of the battery; when the battery is a sodium-ion battery, a sodium supplement agent may be used as the capacity compensation agent 130, and the additive 120 can react with the residual alkali on the surface of the sodium supplement agent, thereby reducing the content of residual alkali on the surface of the sodium supplement agent, enhancing the capacity compensation effect of the sodium supplement agent, and improving the cycle capacity retention rate of the battery.

According to some embodiments of the present application, the capacity compensation layer 1300 may further include at least one of a binder and a conductive agent.

According to some embodiments of the present application, based on the total mass of the capacity compensation layer 1300 and the positive electrode active material layer 1200, the mass proportion of the binder may be 0.8%-5%. For example, the mass proportion may be 0.8%, 1.5%, 2%, 2.5%, 3%, 3.5%, 4%, 4.5%, 5%, or the like, or may be in a range formed by any of the foregoing values. In this way, the adhesion between the capacity compensation layer 1300 and the positive electrode active material layer 1200 is improved, and the risk of film layer peeling off is reduced. According to some specific embodiments of the present application, based on the total mass of the capacity compensation layer 1300, the mass proportion of the binder may be 0.8%-2.2%.

According to some embodiments of the present application, the binder may include at least one of polypropylene, polyethylene, polyvinylidene fluoride, polytetrafluoroethylene, poly(vinylidene fluoride-hexafluoropropylene), or polyhexafluoropropylene. In this way, the adhesion between the capacity compensation layer 1300 and the positive electrode active material layer 1200 is improved, and the risk of film layer peeling off is reduced.

According to some embodiments of the present application, based on the total mass of the capacity compensation layer 1300 and the positive electrode active material layer 1200, the mass proportion of the conductive agent may be 0.3%-10%.

According to some embodiments of the present application, the conductive agent may include at least one of superconducting carbon, a carbon nanotube, graphite, a nanofiber, or graphene. In this way, the conductive agent of the above types can improve the electronic conductivity of the capacity compensation agent 130, reduce the decomposition potential of the capacity compensation agent 130, enhance the effect of compensating for active ions, and improve the cycle capacity retention rate of the battery.

When the battery is a lithium-ion battery, as an example, a positive electrode active material for use in lithium-ion batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.8}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

When the battery is a sodium-ion battery, as an example, the positive electrode active material may include, but is not limited to, at least one of a layered transition metal oxide, a polyanionic compound, and a Prussian blue analog.

Examples of the layered transition metal oxide described above may include:
Na₁₋ₓCuₕFeₖMnₗM^{l}ₘO_{2-y}, where M¹ is one or more of Li, Be, B, Mg, Al, K, Ca, Ti, Co, Ni, Zn, Ga, Sr, Y, Nb, Mo, In, Sn, and Ba, 0 < x ≤ 0.33, 0 < h ≤ 0.24, 0 ≤ k ≤ 0.32, 0 < 1 ≤ 0.68, 0 ≤ m < 0.1, h + k + 1 + m = 1, and 0 ≤ y < 0.2;
Na_{0.67}Mn_{0.7}Ni_{z}M²_{0.3-z}O₂, where M² is one or more of Li, Mg, Al, Ca, Ti, Fe, Cu, Zn, and Ba, and 0 < z ≤ 0.1;
NaₐLi_{b}Ni_{c}Mn_{d}FeₑO₂, where 0.67 < a ≤ 1, 0 < b < 0.2, 0 < c < 0.3, 0.67 < d + e < 0.8, and b + c + d + e = 1.

Examples of the polyanionic compound described above may include:
A¹_{f}M³_{g}(PO₄)ᵢOⱼX¹₃₋ⱼ, where A¹ is one or more of H, Li, Na, K, and NH₄, M³ is one or more of Ti, Cr, Mn, Fe, Co, Ni, V, Cu, and Zn, X¹ is one or more of F, Cl, and Br, 0 < f ≤ 4, 0 < g ≤ 2, 1 ≤ i ≤ 3, and 0 ≤ j ≤ 2;
NaₙM⁴PO₄X², where M⁴ is one or more of Mn, Fe, Co, Ni, Cu, and Zn, X² is one or more of F, Cl, and Br, and 0 < n ≤ 2;
NaₚM⁵_{q}(SO₄)₃, where M⁵ is one or more of Mn, Fe, Co, Ni, Cu, and Zn, 0 < p ≤ 2, and 0 < q ≤2;
NaₛMnₜFe₃₋ₜ(PO₄)₂(P₂O₇), where 0 < s ≤ 4, and 0 ≤ t ≤ 3; for example, t is 0, 1, 1.5, 2, or 3.

Examples of the Prussian blue analog described above may include:
AᵤM⁶ᵥ[M⁷(CN)₆]_{w}·xH₂O, where A is one or more of H⁺, NH₄⁺, an alkali metal cation, and an alkaline earth metal cation, M⁶ and M⁷ are each independently one or more of transition metal cations, 0 < u ≤ 2, 0 < v ≤ 1, 0 < w ≤ 1, and 0 < x < 6. For example, A is one or more of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, and Ra²⁺, and M⁶ and M⁷ are each independently cations of one or more transition metal elements of Ti, V, Cr, Mn, Fe, Co, Ni, Cu, Zn, Sn, and W.

The modified compounds of the materials described above may be obtained by doping modification and/or surface-coating modification of the materials.

In some embodiments, the positive electrode plate 1000 can be prepared in the following manner: dispersing the components described above for preparing the positive electrode plate 1000, such as the positive electrode active material, the capacity compensation agent 130, the additive 120, the conductive agent, the binder, and any other components, in a solvent (such as N-methylpyrrolidone) to form a positive electrode slurry; and coating the positive electrode current collector 1100 with the positive electrode slurry, and performing drying, cold pressing, and other processes, such that the positive electrode plate 1000 can be obtained.

A second aspect of the present application further provides a method for preparing a positive electrode plate. The method includes forming a capacity compensation layer on at least one side of a positive electrode active material layer, where the capacity compensation layer includes a capacity compensation agent and an additive.

According to some embodiments of the present application, referring to FIG. 3, when at least part of the surface of the capacity compensation agent 130 is coated with the carbon coating layer 110 and at least part of the surface of the carbon coating layer 110 is coated with the additive 120, the method for preparing the capacity compensation agent 130 may be: well mixing the capacity compensation agent 130 and the carbon coating layer 110 in water, performing spray drying, and then performing calcination under an inert atmosphere to obtain the capacity compensation agent 130 coated with the carbon coating layer 110; and grinding and well mixing the capacity compensation agent 130 coated with the carbon coating layer 110 and the additive 120, and then placing the mixture in a reaction kettle, where the heating temperature may be 140 °C-160 °C, and the heating duration may be 20 h-30 h, such that the capacity compensation agent 130, in which at least part of the surface of the carbon coating layer 110 is coated with the additive 120 and at least part of the surface of the capacity compensation agent 130 is coated with the carbon coating layer 110, can be obtained. According to some specific embodiments of the present application, the heating temperature may be 140 °C, 145 °C, 150 °C, 155 °C, 160 °C, or the like, or may be in a range formed by any of the foregoing values. According to some specific embodiments of the present application, the heating duration may be 20 h, 22 h, 24 h, 26 h, 28 h, 30 h, or the like, or may be in a range formed by any of the foregoing values.

According to some embodiments of the present application, referring to FIG. 4, when at least part of the surface of the capacity compensation agent 130 is coated with the additive 120 and at least part of the surface of the additive 120 is coated with the carbon coating layer 110, the method for preparing the capacity compensation agent 130 may be: grinding and well mixing the capacity compensation agent 130 and the additive 120, placing the mixture in a reaction kettle, where the heating temperature may be 140 °C-160 °C and the heating duration may be 20 h-30 h, and then ball-milling the mixture with the carbon coating layer 110, such that the capacity compensation agent 130, in which at least part of the surface of the capacity compensation agent 130 is coated with the additive 120 and at least part of the surface of the additive 120 is coated with the carbon coating layer 110, can be obtained. According to some specific embodiments of the present application, the heating temperature may be 140 °C, 145 °C, 150 °C, 155 °C, 160 °C, or the like, or may be in a range formed by any of the foregoing values. According to some specific embodiments of the present application, the heating duration may be 20 h, 22 h, 24 h, 26 h, 28 h, 30 h, or the like, or may be in a range formed by any of the foregoing values.

According to some embodiments of the present application, referring to FIG. 5, when part of the surface of the capacity compensation agent 130 is coated with the carbon coating layer 110 and part of the surface of the capacity compensation agent 130 that is not coated with the carbon coating layer 110 is coated with the additive 120, the method for preparing the capacity compensation agent 130 may be: ball-milling the capacity compensation agent 130 coated with the carbon coating layer 110 and the additive 120, and then placing the mixture in a reaction kettle, where the heating temperature is 140 °C-200 °C and the heating duration is 6 h-15 h, to obtain the capacity compensation agent 130 coated with the carbon coating layer 110 and the additive 120 on the surface. According to some specific embodiments of the present application, the heating temperature may be 150 °C, 160 °C, 170 °C, 180 °C, 190 °C, 200 °C, or the like, or may be in a range formed by any of the foregoing values. According to some specific embodiments of the present application, the heating duration may be 6 h, 7 h, 8 h, 9 h, 10 h, 11 h, 12 h, 13 h, 14 h, 15 h, 16 h, or the like, or may be in a range formed by any of the foregoing values.

A third aspect of the present application provides a battery. The battery includes the positive electrode plate 1000 according to the first aspect of the present application or the positive electrode plate prepared by the method according to the second aspect of the present application. In this way, the cycle capacity rate of the battery is improved, and the DCR of the battery is reduced.

### [Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon (Super P), acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Electrolyte]

The electrolyte conducts ions between the positive electrode plate 1000 and the negative electrode plate. The present application has no specific limitations on the type of the electrolyte, which can be selected according to needs.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

### [Separator]

In some embodiments, the battery further includes a separator. The present application does not particularly limit the type of the separator, and any porous-structure separator known to have good chemical stability and mechanical stability may be selected.

In some embodiments, the separator may be made of a material selected from at least one of glass fiber, non-woven fabric, polyethylene, polypropylene, and polyvinylidene fluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate 1000, the negative electrode plate, and the separator may be manufactured into an electrode assembly through a winding process or a stacking process.

In some embodiments, the battery may include an outer packaging. The outer packaging can be used for packaging the electrode assembly and electrolyte described above.

In some embodiments, the outer packaging of the battery may be a hard shell, such as a hard plastic shell, an aluminum shell, or a steel shell. The outer packaging of the battery may also be a soft pack, such as a pouch-type soft pack. The soft pack may be made of plastic, and examples of the plastic may include polypropylene, polybutylene terephthalate, polybutylene succinate, and the like.

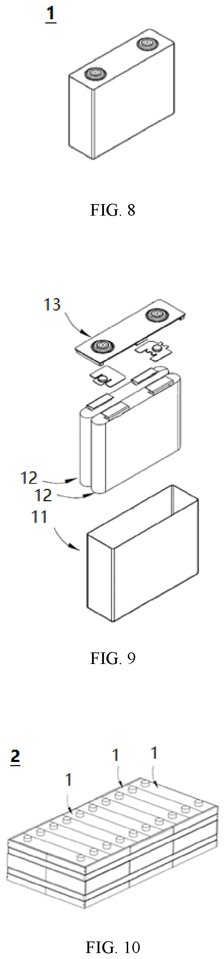

The present application does not particularly limit the shape of the battery, and it may have a cylindrical shape, a prismatic shape, or any other shape. For example, FIG. 8 shows a battery 1 having a prismatic structure as an example.

In some embodiments, the battery 1 may include an outer packaging. The outer packaging is used for packaging the positive electrode plate, the negative electrode plate, and the electrolytic solution.

In some embodiments, referring to FIG. 9, the positive electrode plate, the negative electrode plate, and the separator may be manufactured into an electrode assembly 12 through a winding process or a stacking process.

In some embodiments, referring to FIG. 9, the outer packaging may include a housing 11 and a cover plate 13. The housing 11 may include a bottom plate and side plates connected to the bottom plate, and the bottom plate and the side plates define, in an enclosing manner, an accommodating cavity. The housing 11 is provided with an opening in communication with the accommodating cavity, and the cover plate 13 is capable of lidding the opening to close the accommodating cavity.

In some embodiments, the outer packaging of the battery 1 may be a hard shell, such as a hard plastic shell, an aluminum shell, or a steel shell.

The outer packaging of the battery 1 may also be a soft pack, such as a pouch-type soft pack. The soft pack may be made of plastic. For example, the plastic may include one or more of polypropylene (PP), polybutylene terephthalate (PBT), and polybutylene succinate (PBS).

In some embodiments, the batteries 1 may be assembled into a battery module 2. The number of batteries 1 included in the battery module 2 may be more than one, and the specific number may be adjusted based on the application and capacity of the battery module 2.

In some embodiments, the outer packaging of the battery 1 may be a hard shell, such as a hard plastic shell, an aluminum shell, or a steel shell.

FIG. 10 shows a battery module 2 as an example. Referring to FIG. 10, in the battery module 2, a plurality of batteries 1 may be sequentially arranged in the length direction of the battery module 2. Certainly, the arrangement may also be in any other manner. Further, the plurality of batteries 1 may be fixed by fasteners.

The battery module 2 may further include a shell having an accommodating space in which the plurality of batteries 1 are accommodated. In some embodiments, the above battery module may further be assembled into a battery pack; the number of the battery modules included in the battery pack may be adjusted based on the application and capacity of the battery pack.

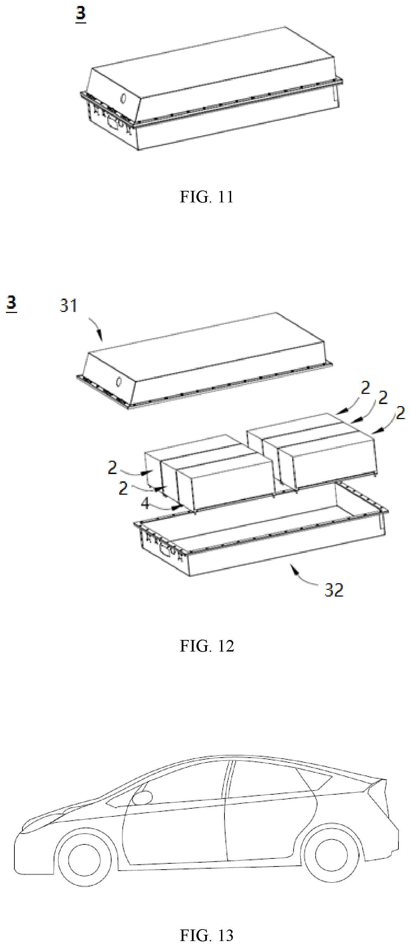

FIG. 11 and FIG. 12 show a battery pack 3 as an example. Referring to FIG. 11 and FIG. 12, the battery pack 3 may include a battery case and a plurality of battery modules 2 disposed in the battery case. The battery case includes an upper case body 31 and a lower case body 32. The upper case body 31 is capable of lidding the lower case body 32 to form a closed space for accommodating the battery modules 2. The plurality of battery modules 2 may be arranged in any manner in the battery case.

A fourth aspect of the present application provides an electric device. The electric device includes the battery according to the third aspect of the present application. In this way, the energy density and the cycle life of the electric device are improved.

As an example, the battery may be used as a power source for the electric device, or as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

As the electric device, a battery may be selected based on the usage requirements of the electric device.

FIG. 13 shows an electric device as an example. The electric device is a pure electric vehicle, a hybrid electric vehicle, a plug-in hybrid electric vehicle, or the like. To meet the requirements of the electric device for high power and high energy density of the battery, a battery pack or a battery module may be used.

As another example, the device may be a mobile phone, a tablet computer, a laptop computer, or the like. The electric device is generally required to be light and thin, and a battery can thus be used as a power source.

In order to make the technical problems to be addressed, the technical solutions, and the beneficial effects of the embodiments of the present application more apparent, the present application is further described in detail below with reference to the drawings and examples. Apparently, the described embodiments are merely some embodiments of the present application, rather than all of the embodiments. The following description of at least one exemplary embodiment is merely illustrative and is in no way intended to limit the present application and the application thereof. Based on the embodiments in the present application, all other embodiments obtained by those of ordinary skill in the art without creative work shall fall within the protection scope of the present application.

### Example 1

### 1. Preparation of positive electrode plate

LiFePO₄ (LFP), a conductive agent Super P, and a binder polyvinylidene fluoride (PVDF) were thoroughly stirred and well mixed in an N-methylpyrrolidone (NMP) solvent in a weight ratio of 96:2:2 to obtain a first slurry.

The capacity compensation agent Li₅FeO₄/C and sulfur were ball-milled in a mass ratio of Li₅FeO₄/C to sulfur of 1:0.4, and the ball-milled mixture was placed in a reaction kettle and allowed to react at 155 °C for 12 h. Li₅FeO₄ coated with carbon and sulfur on the surface, PVDF, Super P, and LFP were thoroughly stirred and well mixed in NMP in a weight ratio of 35:2:2:61 to obtain a second slurry, where based on the total mass of the capacity compensation agent Li₅FeO₄/C, the mass proportion of carbon was 4%. The first slurry and the second slurry were formed on the positive electrode current collector by coating, and then cold pressing was performed, such that the positive electrode plate was obtained. The positive electrode active material layer was located on the surface of the positive electrode current collector, and the mass of the positive electrode active material layer was 20.384 g/cm². The capacity compensation layer was located on the surface of the positive electrode active material layer distal to the positive electrode current collector, and the mass of the capacity compensation layer was 0.416 g/cm².

### 2. Preparation of negative electrode plate

An active substance artificial graphite, a conductive agent acetylene black, a binder styrene-butadiene rubber (SBR), and a thickener sodium carboxymethylcellulose (CMC-Na) were thoroughly stirred and well mixed in deionized water in a weight ratio of 96.5:0.7:1.8:1. Then, a copper foil was coated with the mixture, followed by drying and cold pressing to obtain the negative electrode plate.

### 3. Preparation of electrolytic solution

In a glove box under an argon atmosphere (H₂O < 0.1 ppm, O₂ < 0.1 ppm), ethylene carbonate and ethyl methyl carbonate were mixed in a mass ratio of 30:70 to obtain an organic solvent. A fully dried electrolyte salt LiPF₆ was dissolved in the above solvent and the mixture was well mixed to obtain an electrolytic solution with a concentration of 1 mol/L.

### 4. Separator

A polypropylene film was used as the separator.

### 5. Preparation of battery

An electrode assembly was obtained by stacking the positive electrode plate, the separator, and the negative electrode plate in sequence, where the separator was disposed between the positive electrode plate and the negative electrode plate to play an isolating role, and then winding. The electrode assembly was placed in an outer packaging, and the above prepared electrolytic solution was injected into the dried lithium-ion battery, followed by processes including vacuum packaging, standing, formation, and shaping, such that the lithium-ion battery was obtained.

The preparation methods for the batteries in Examples 2-17 and Comparative Example 1 were the same as the preparation method in Example 1, and the differences are detailed in Table 1.

Examples 2-11 differ from Example 1 in that the mass ratio of the capacity compensation agent Li₅FeO₄/C to the additive sulfur, the mass of the positive electrode active material layer, and the mass of the capacity compensation layer are adjusted accordingly, and the rest is the same as in Example 1.

Examples 12-15 differ from Example 3 in that the weight ratios of substances in the first slurry and the second slurry are adjusted accordingly, and the rest is the same as in Example 3. In Example 12, the weight ratio of LFP, Super P, and PVDF in the first slurry was 97.9:0.1:2, and the weight ratio of Li₅FeO₄ coated with carbon and sulfur, PVDF, Super P, and LFP in the second slurry was 35:0.1:2:62.9. In Example 13, the weight ratio of LFP, Super P, and PVDF in the first slurry was 97.7:0.3:2, and the weight ratio of Li₅FeO₄ coated with carbon and sulfur, PVDF, Super P, and LFP in the second slurry was 35:0.3:2:62.7. In Example 14, the weight ratio of LFP, Super P, and PVDF in the first slurry was 97.3:0.7:2, and the weight ratio of Li₅FeO₄ coated with carbon and sulfur, PVDF, Super P, and LFP in the second slurry was 35:0.7:2:62.3. In Example 15, the weight ratio of LFP, Super P, and PVDF in the first slurry was 88:10:2, and the weight ratio of Li₅FeO₄ coated with carbon and sulfur, PVDF, Super P, and LFP in the second slurry was 35:10:2:53.

The preparation method for the battery in Comparative Example 1 was the same as that in Example 1, except that LFP, Super P, PVDF, Li₅FeO₄/C, and an additive sulfur were thoroughly stirred and well mixed in an NMP solvent in a weight ratio of 90.8:2:2:5:0.2, and an aluminum foil was coated with the mixture, followed by cold pressing to obtain a positive electrode active material layer containing a positive electrode active material, an additive, and a capacity compensation agent at the same time.

**Table 1**

| | **Mass proportion of capacity compensation agent a₁/%** | **Type of capacity compensation agent** | **Additive** | **Mass proportion of additive a₂/%** | **a₂/a₁** | **Mass proportion of positive electrode active material b/%** | **Mass proportion of conductive agent/%** | **Mass proportion of binder/%** | **Mass of positive electrode active material layer g/cm²** | **Mass of capacity compensation layer g/cm²** |
|---|---|---|---|---|---|---|---|---|---|---|
| **Comparative Example 1** | 5.00 | Li₅FeO₄/C | S | 0.2 | 0.040 | 90.8 | 2 | 2 | / | / |
| **Example 1** | 0.50 | Li₅FeO₄/C | S | 0.2 | 0.400 | 95.3 | 2 | 2 | 20.384 | 0.416 |
| **Example 2** | 1.00 | Li₅FeO₄/C | S | 0.2 | 0.200 | 94.8 | 2 | 2 | 20.087 | 0.713 |
| **Example 3** | 5.00 | Li₅FeO₄/C | S | 0.2 | 0.040 | 90.8 | 2 | 2 | 17.710 | 3.090 |
| **Example 4** | 10.00 | Li₅FeO₄/C | S | 0.2 | 0.020 | 85.8 | 2 | 2 | 14.738 | 6.062 |
| **Example 5** | 12.00 | Li₅FeO₄/C | S | 0.2 | 0.017 | 83.8 | 2 | 2 | 13.550 | 7.250 |
| **Example 6** | 5.00 | Li₅FeO₄/C | S | 0.05 | 0.010 | 90.95 | 2 | 2 | 17.799 | 3.001 |
| **Example 7** | 5.00 | Li₅FeO₄/C | S | 0.1 | 0.020 | 90.9 | 2 | 2 | 17.769 | 3.031 |
| **Example 8** | 5.00 | Li₅FeO₄/C | S | 0.5 | 0.100 | 90.5 | 2 | 2 | 17.531 | 3.269 |
| **Example 9** | 5.00 | Li₅FeO₄/C | S | 1 | 0.200 | 90 | 2 | 2 | 17.234 | 3.566 |
| **Example 10** | 5.00 | Li₅FeO₄/C | S | 2 | 0.400 | 89 | 2 | 2 | 16.640 | 4.160 |
| **Example 11** | 5.00 | Li₅FeO₄/C | S | 2.2 | 0.440 | 88.8 | 2 | 2 | 16.521 | 4.279 |
| **Example 12** | 5.00 | Li₅FeO₄/C | S | 0.2 | 0.040 | 92.7 | 0.1 | 2 | 17.710 | 3.090 |
| **Example 13** | 5.00 | Li₅FeO₄/C | S | 0.2 | 0.040 | 92.5 | 0.3 | 2 | 17.710 | 3.090 |
| **Example 14** | 5.00 | Li₅FeO₄/C | S | 0.2 | 0.040 | 92.1 | 0.7 | 2 | 17.710 | 3.090 |
| **Example 15** | 5.00 | Li₅FeO₄/C | S | 0.2 | 0.040 | 82.8 | 10 | 2 | 17.710 | 3.090 |
| **Example 16** | 5.00 | Li₅FeO₄/C | Na₂S | 0.2 | 0.040 | 90.8 | 2 | 2 | 17.710 | 3.090 |
| **Example 17** | 5.00 | Li₂C₂O₄/C | S | 0.2 | 0.040 | 90.8 | 2 | 2 | 17.710 | 3.090 |

### Performance Testing

### 1. DCR test

The ambient temperature was maintained at 25 °C, and the batteries were charged and discharged for 3 cycles at a rate of 0.33C, with a cut-off voltage of 2.5 V-3.65 V. The discharge capacity of the third cycle was taken as the standard capacity C₀, and then the batteries were charged to 50% C₀ (50% SOC) at 0.33C₀, left to stand for 30 min, and then discharged for 30 s at a current of I = 4C₀. The voltage difference ΔU before and after the discharging at 4C₀ was recorded, and DCR = ΔU/I.

### 2. Test method for cycle capacity retention rate

(1) At 45 °C, the lithium-ion batteries were each charged at a constant current of 1/3C to 3.65 V, charged at a constant voltage of 3.65 V until the current reached 0.05C, left to stand for 5 min, and then discharged at 1/3C to 2.5 V, and the discharge capacity C₀ was recorded. (2) The lithium-ion batteries were then charged at a constant current of 1.0C to 3.65 V, left to stand for 5 min, and then discharged at 1/3C to 2.5 V, and the discharge capacity C₁ was recorded. The above step (2) was repeated 200 times, and the discharge capacity C₂₀₀ of the lithium-ion battery after the 200th cycle was recorded, and the capacity retention rate P₂₀₀ = C₂₀₀/C₀ × 100%.

The test results of the batteries in Examples 1-17 and Comparative Example 1 are shown in Table 2.

**Table 2**

| | **Cycle capacity retention rate/%** | **DCR/mohm** |
|---|---|---|
| **Comparative Example 1** | 84.4 | 701 |
| **Example 1** | 85 | 698 |
| **Example 2** | 86.1 | 647 |
| **Example 3** | 93.4 | 667 |
| **Example 4** | 95.2 | 673 |
| **Example 5** | 95.6 | 691 |
| **Example 6** | 92.3 | 625 |
| **Example 7** | 92.1 | 608 |
| **Example 8** | 91.8 | 598 |
| **Example 9** | 91.2 | 621 |
| **Example 10** | 90.7 | 686 |
| **Example 11** | 90.6 | 693 |
| **Example 12** | 91.1 | 754 |
| **Example 13** | 92.4 | 716 |
| **Example 14** | 92.6 | 643 |
| **Example 15** | 90.9 | 358 |
| **Example 16** | 91.5 | 603 |
| **Example 17** | 87.7 | 681 |

Conclusion: The cycle capacity retention rates of the batteries in Examples 1-17 are all higher than that in Comparative Example 1, indicating that for the battery according to the present application, by arranging the capacity compensation agent and the additive to be located in the same layer, the capacity compensation effect of the capacity compensation agent can be enhanced, and thereby the cycle capacity retention rate of the battery is improved.

As can be seen from Examples 1-5, by adjusting the content of the capacity compensation agent, the cycle capacity retention rate of the battery can be improved, and the DCR of the battery can be reduced, such that the overall performance of the battery is improved.

As can be seen from Examples 6-11, by adjusting the content of the additive, the cycle capacity retention rate of the battery can be improved, and the DCR of the battery can be reduced, such that the overall performance of the battery is improved.

As can be seen from Examples 1-11, by adjusting the ratio of the content of the additive to the content of the positive electrode active material, the cycle capacity retention rate of the battery can be improved, and the DCR of the battery can be reduced, such that the overall performance of the battery is improved.

As can be seen from Examples 12-15, by adjusting the content of the conductive agent in the capacity compensation layer, the cycle capacity retention rate of the battery can be improved, and the DCR of the battery can be reduced, such that the overall performance of the battery is improved.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A positive electrode plate, comprising:
a positive electrode active material layer, wherein the positive electrode active material layer comprises a positive electrode active material; and
a capacity compensation layer, wherein the capacity compensation layer is disposed on at least one side of the positive electrode active material layer, the capacity compensation layer comprises a capacity compensation agent and an additive, and the additive comprises at least one of elemental sulfur, sulfide, elemental selenium, selenide, elemental phosphorus, phosphide, elemental tellurium, elemental iodine, or elemental boron.

2. The positive electrode plate according to claim 1, wherein at least part of a surface of the capacity compensation agent is coated with the additive.

3. The positive electrode plate according to claim 1 or 2, wherein based on a total mass of the capacity compensation layer and the positive electrode active material layer, a mass proportion of the capacity compensation agent is a₁, a mass proportion of the additive is a₂, and 0.01 ≤ a₂/a₁ ≤ 0.45 is satisfied.

4. The positive electrode plate according to claim 3, wherein 0.5% ≤ a₁ ≤ 12%, optionally 1% ≤ a₁ ≤ 10%.

5. The positive electrode plate according to claim 3 or 4, wherein 0.05% ≤ a₂ ≤ 2%, optionally 0.1% ≤ a₂ ≤ 0.5%.

6. The positive electrode plate according to any one of claims 3 to 5, wherein based on the total mass of the positive electrode active material layer and the capacity compensation layer, a mass proportion of the positive electrode active material is 80%-96%.

7. The positive electrode plate according to any one of claims 3 to 6, wherein at least one of the following conditions is satisfied:
the sulfide comprises at least one of lithium sulfide, sodium sulfide, selenium sulfide, cobalt sulfide, or nickel sulfide;
the phosphide comprises at least one of lithium phosphide or sodium phosphide; and
the selenide comprises at least one of lithium selenide or sodium selenide.

8. The positive electrode plate according to any one of claims 1 to 7, wherein a carbon coating layer is formed on at least part of the surface of the capacity compensation agent.

9. The positive electrode plate according to claim 8, wherein based on a total mass of the capacity compensation agent, a mass proportion of the carbon coating layer is 0.5%-10%.

10. The positive electrode plate according to any one of claims 1 to 9, wherein the capacity compensation layer further comprises the positive electrode active material.

11. The positive electrode plate according to any one of claims 1 to 10, wherein the capacity compensation agent comprises a lithium supplement agent and/or a sodium supplement agent, and the lithium supplement agent comprises at least one of Li₂C₂O₄, Li₂M₁O₂, Li₂M₂O₃, Li₃FeₓM₃₍₁₋ₓ₎O₄, Li₆Mn_{y}M_{4(1-y)}O₄, or Li₆Co_{y}M_{4(1-y)}O₄, wherein 0.5 ≤ x ≤ 1, 0.5 ≤ y ≤ 1, M₁ comprises at least one of Ni, Mn, Cu, Fe, Cr, or Mo, M₂ comprises at least one of Ni, Mn, Fe, Mo, Zr, Si, Cu, Cr, or Ru, M₃ comprises at least one of Al, Nb, Co, Mn, Ni, Mo, Ru, or Cr, M₄ comprises at least one of Ni, Fe, Cu, or Ru, and the sodium supplement agent comprises at least one of Na₂O, Na₂O₂, Na₂CO₃, Na₂C₂O₄, Na₂C₄O₄, Na₂S, Na₂Se, Na₂Se₂, NaCrO₂, Na₃P, Na₃N, Na₂NiO₂, Na₂CuO₂, Na₂FeO₂, or NaF.

12. A method for preparing a positive electrode plate, comprising: forming a capacity compensation layer on at least one side of a positive electrode active material layer, wherein the capacity compensation layer comprises a capacity compensation agent and an additive, and the additive comprises at least one of elemental sulfur, sulfide, elemental selenium, selenide, elemental phosphorus, phosphide, elemental tellurium, elemental iodine, or elemental boron.

13. A battery, comprising the positive electrode plate according to any one of claims 1 to 11 or the positive electrode plate prepared by the method according to claim 12.

14. An electric device, comprising the battery according to claim 13.
